# FASCICULE DE BREVET EUROPEEN

(11) **EP 1 589 277 B1**
(45) Date de publication et mention de la délivrance du brevet: **23.01.2008**
(21) Numéro de dépôt: 04405244.7
(22) Date de dépôt: 20.04.2004
(51) Int. Cl.: F16M 7/00, B41F 13/00

(54) **Dispositif de positionnement et d'assemblage de bâtis successifs**
Vorrichtung zum Ausrichten und Verbinden einer Mehrzahl aufeinanderfolgender Baueinheiten
Positioning and assembling device for support units arranged in succession

(43) Date de publication de la demande: 26.10.2005
(73) Titulaire: BOBST S.A., 1001 Lausanne (CH)
(72) Inventeur: Compagnone, Giovanni, 1023 Crissier (CH); Cavallari, Alvise, 1302 Vufflens-la-Ville (CH)
(74) Mandataire: Poirier, Jean-Michel Serge

(56) Documents cités:
- EP-A- 0 687 559
- DE-A- 10 017 507
- US-A- 3 978 574

## Description

La présente invention a pour objet un dispositif de positionnement et d'assemblage de bâtis successifs, constituant une machine d'une chaîne de production, dispositif notamment utilisé pour le positionnement relatif de deux bâtis adjacents.

Constituées de plusieurs bâtis successifs, de telles machines sont couramment utilisées dans le domaine de l'industrie de l'emballage et de l'impression, notamment pour le façonnage et la réalisation de boîtes en carton. On mentionnera cependant que de nombreuses lignes de production dans des domaines tout à fait différents nécessitent également l'utilisation de machines formées d'une pluralité d'entités assemblées et disposées les unes à la suite des autres. Ces entités peuvent être des stations dans lesquelles seront effectuées diverses opérations successives en vue de la réalisation, de la modification ou du conditionnement d'un produit traversant la ligne de production depuis son entrée en amont jusqu'à sa sortie en aval (voir par exemple EP-A-0687559).

De manière à énoncer concrètement le problème que se propose de résoudre l'objet de la présente invention, il va être pris en exemple, comme machine de production, une imprimeuse rotative formée de plusieurs groupes imprimeurs. L'impression en couleurs d'une feuille de carton ou d'une matière en bande, peut être obtenue à partir d'une ligne d'impression formée d'au moins trois ou quatre groupes imprimeurs. Chacun de ces groupes déposant une couleur primaire, à savoir le jaune, le cyan et le magenta pour une impression en trichromie.

La superposition de ces couleurs permet par différentes combinaisons et intensités d'obtenir toutes les teintes de la nature. Cependant, pour obtenir une impression de qualité il est nécessaire de pouvoir garantir une parfaite superposition des impressions successives laissées par chacun des groupes imprimeurs. En vue d'atteindre ultérieurement ce but, une des premières conditions réside dans le positionnement, les uns par rapport aux autres, des bâtis de chacune de ces entités de façon à obtenir, par exemple, un alignement aussi parfait que possible.

De tels bâtis sont généralement dotés d'au moins quatre pieds, chacun disposé dans un angle de l'embase. Ces pieds sont montés sur des tiges filetées de sorte qu'ils peuvent être réglables en hauteur indépendamment les uns des autres. Grâce à un tel système, il est possible de rendre le plan de passage de la feuille ou de la matière en bande du groupe imprimeur parfaitement horizontal, le cas échéant en compensant les défauts de planéité du sol sur lequel est posé le groupe imprimeur en question.

Le positionnement en ligne des différents groupes imprimeurs se fait méthodiquement en commençant par le dernier. Le but de cet alignement vise à obtenir pour chaque groupe imprimeur un plan de passage parfaitement horizontal et aligné par rapport aux plans de passage des groupes adjacents amont et aval. Pour ce faire, on utilise un fil tendu, entre une extrémité et l'autre de la ligne de production, qui sert de repère linéaire pour l'alignement latéral et angulaire des différents bâtis ainsi que de ligne horizontale de référence. On a également recours à un niveau à bulle, à un compas muni d'un comparateur ainsi qu'à des barres d'espacement.

Les opérations d'alignement sont les suivantes:
On commencera par disposer le dernier bâti parallèlement au fil, à une certaine distance de celui-ci. On règlera le niveau transversal du bâti à l'aide d'un niveau à bulle disposé sur le contre-cylindre du groupe-imprimeur en question. Puis on règlera le niveau longitudinal de chaque côté du bâti. La perpendicularité du bâti par rapport au fil tendu se règlera à l'aide du compas et du comparateur. Pour ce faire, le compas se fixe en une de ses extrémités au bas du bâti dans un alésage à tolérance serrée prévu en amont du groupe-imprimeur. Un comparateur disposé à l'autre extrémité du compas permet de lire par rapport au sol une valeur qui va être ensuite comparée à une seconde valeur mesurée après pivotement du compas d'un demi-tour. Les différences lues sur le comparateur seront corrigées à l'aide des vis équipant les pieds du bâti. Par étapes successives, on doit pouvoir obtenir une parfaite perpendicularité du groupe-imprimeur.

Ensuite, il convient de disposer le bâti du groupe-imprimeur adjacent parallèlement au fil tendu, à la même distance que précédemment. Le réglage de ce second groupe-imprimeur se fera en fonction du précédent qui vient d'être mis en place. A cette fin, on s'aidera d'une règle de précision munie d'un niveau que l'on disposera longitudinalement en appui entre les contre-cylindres des deux groupes-imprimeurs. Cette opération permettra de régler la hauteur du second groupe-imprimeur par rapport au précédent. Il conviendra de régler également la distance séparant ces deux groupes-imprimeurs qui doit être précise et constante pour tous les groupes. Cette opération nécessite l'utilisation de barres d'espacement de référence.

Une fois que ces premiers réglages sur le second groupe-imprimeur sont effectués, il convient encore de contrôler la perpendicularité de ce second groupe par rapport à l'horizontalité donnée par le fil tendu. Ce contrôle se fait à l'aide du compas et du comparateur comme précédemment. Dans le cas où le résultat du contrôle ne serait pas satisfaisant, il conviendrait alors de décrocher les barres d'espacement et de corriger l'erreur de perpendicularité. Ensuite, les niveaux devront faire l'objet d'un nouveau contrôle.

Après ces opérations, il sera encore nécessaire de procéder de la même manière pour tous les autres groupes imprimeurs. Dans le cas d'impressions en quadrichromie et/ou d'impressions faisant appel à des encres spéciales, telles que des encres argentées ou dorées, il serait nécessaire de positionner pas moins de quatre, cinq ou six groupes-imprimeurs. A cela s'ajoute encore le positionnement d'autres bâtis supportant des stations utiles au fonctionnement d'une telle ligne d'impression. Parmi ces stations, on citera en exemple la station d'introduction, les multiples stations intercalaires de séchage, la station de réception, etc... De plus, il est également possible qu'une ligne de production prévue pour des travaux d'impression soit directement suivie d'une ligne pour le façonnage de la matière imprimée. On se rend compte que de telles machines ou combinaison de machines peuvent compter un grand nombre de stations dont les bâtis de chacune d'elles devront être positionnés avec précision les uns par rapport aux autres.

Le temps que nécessite un tel alignement de bâtis est le principal inconvénient des méthodes appliquées jusqu'à ce jour. L'importance de ce temps retarde la mise en route de la ligne de production et renchérit également le coût de l'installation des machines.

Le but de la présente invention vise à remédier aux inconvénients précités en suggérant un dispositif permettant de simplifier le positionnement de bâtis successifs constituant une machine, en vue de son assemblage. De plus, le dispositif en question doit être de construction simple afin de pouvoir bénéficier d'un faible prix de revient et d'abaisser autant que possible le coût global que représente l'installation d'une telle machine. L'objet de la présente invention doit également pouvoir être mis en oeuvre sans nécessiter de modifications substantielles dans la réalisation des bâtis à positionner. Enfin, le dispositif de l'invention ne doit pas se limiter au positionnement et à l'assemblage de bâtis selon un alignement exclusivement rectiligne, mais doit également pouvoir donner entière satisfaction lors de l'installation d'une ligne de production coudée, par exemple à angle droit.

Ces buts sont atteints grâce à la présente invention qui a pour objet un dispositif pour le positionnement et l'assemblage de bâtis successifs, notamment pour le positionnement de bâtis constituant une machine de production, conforme à ce qu'énonce la revendication 1.

L'invention sera mieux comprise à l'étude d'un mode de réalisation préféré, pris à titre nullement limitatif et illustré par les figures annexées dans lesquelles:
La figure 1 est une vue schématique d'une machine comprenant plusieurs bâtis.
La figure 2 est une vue schématique d'une portion de machine dont les différents bâtis qui la composent sont assemblés et positionnés à l'aide du dispositif de la présente invention.
La figure 3 est un détail d'une partie de la figure 2.

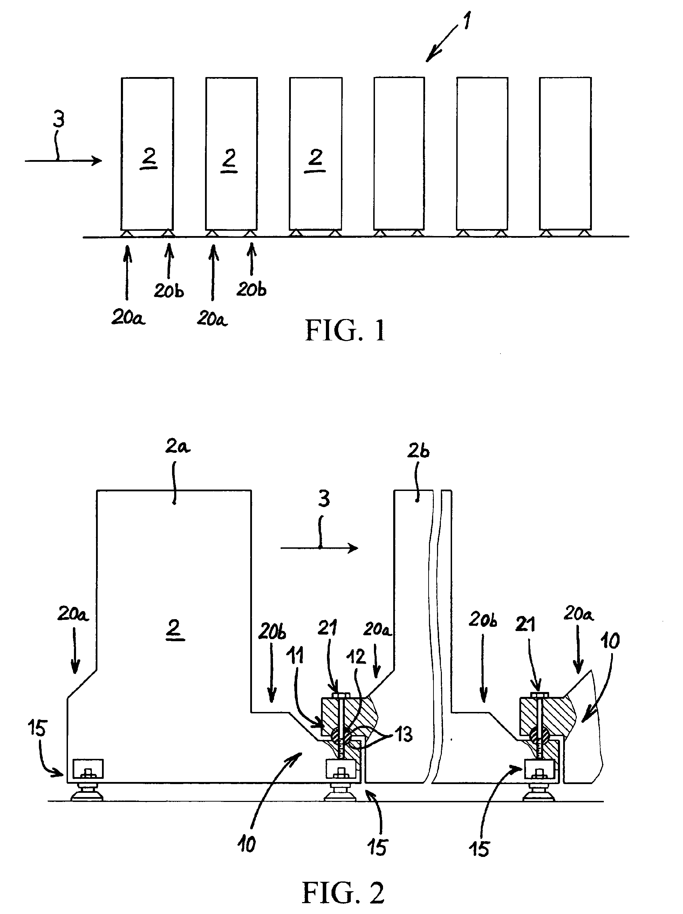

La figure 1 est une vue schématique d'une machine 1 d'une chaîne de production comprenant une pluralité de bâtis 2 disposés successivement les uns à la suite des autres. Chacun de ces bâtis 2 étant destiné à supporter une station ou une entité de travail dans laquelle est effectuée, sur un produit non représenté, au moins une des opérations de la chaîne de production. Ces opérations sont effectuées dans un ordre logique, de l'amont vers l'aval comme définit par le sens qu'indique la flèche 3. De telles stations pourraient être chacune un groupe-imprimeur d'une machine d'impression par exemple. Lesdites opérations pourraient alors correspondre à l'impression des différentes couleurs primaires nécessaires pour réaliser une impression en couleurs d'une matière en bande ou en feuille.

La figure 2 est une vue schématique plus détaillée d'une portion de la machine 1, illustrant le positionnement et l'assemblage par paires de trois bâtis 2 successifs, au moyen d'un dispositif 10, objet de la présente invention. Ainsi, le dispositif 10 de positionnement et d'assemblage est toujours disposé à la jonction de deux bâtis 2 adjacents, lesquels sont définis ici comme étant un bâti amont 2a et un bâti aval 2b. Il conviendra donc de prévoir n-1 dispositifs 10 pour positionner et assembler n bâtis constitutifs d'une machine 1. Par souci de simplification, seul le premier bâti est illustré en entier dans la figure 2; les deux bâtis suivants étant représentés en partie seulement.

Selon l'illustration donnée à la figure 2, le bâti amont 2a correspond au premier bâti 2 conformément au sens indiqué par la flèche 3. Toujours en référence à cette flèche, le bâti aval 2b correspond donc au bâti adjacent qui suit le bâti amont 2a, à savoir dans cet exemple le second bâti 2. En vue de généraliser les différents cas de figures possibles, il convient de comprendre que le bâti amont 2a pourrait être aussi l'un des quelconques bâtis 2 de la machine 1, à l'exception du dernier.

Le dispositif 10 comprend une articulation 11 joignant le bâti amont 2a au bâti aval 2b. Agencée dans la partie aval 20b du bâti amont 2a, l'articulation 11 supporte la partie amont 20a du bâti aval 2b. Cette articulation est formée de préférence d'un cylindre 12 maintenu dans des paliers 13. Ces derniers sont avantageusement situés aux extrémités de ce cylindre 12. Cependant, il serait également possible d'adjoindre un ou plusieurs paliers intermédiaires pour supporter conjointement le poids du cylindre 12 et celui de la partie amont 20a du bâti aval 2b. Selon un autre mode de réalisation, il serait également possible de prévoir un appui continu sur toute la longueur du cylindre.

Préférentiellement, l'articulation 11 est disposée sur la bissectrice de l'angle que forme le positionnement de deux bâtis 2 adjacents, à savoir l'angle horizontal que forme le bâti amont 2a avec le bâti aval 2b. Généralement, le positionnement des bâtis 2 est rectiligne de sorte que dans ce cas, l'articulation est disposée perpendiculairement à cet alignement. Cependant, il peut arriver que les bâtis 2 de la machine 1 ne soient pas tous alignés selon un seul axe longitudinal mais décrivent par exemple un coude à angle droit. Un tel agencement dépendra essentiellement des possibilités d'agencement que peut offrir la machine 1 ainsi que de la place disponible pour l'installer.

Dans un autre mode de réalisation, il serait possible d'agencer plusieurs articulations 11, par exemple une de chaque côté des bâtis 2. Aussi, ces articulations pourraient être sphériques, en forme de rotule, plutôt que cylindriques.

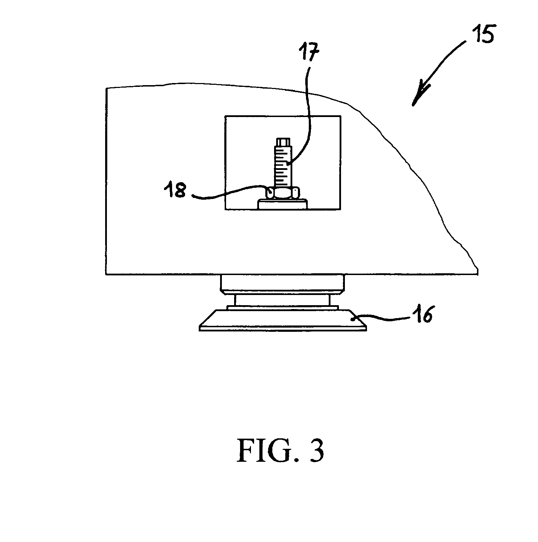

En référence à la figure 3, celle-ci illustre le détail d'un des appuis 15 au sol utilisés pour soutenir les bâtis 2. Ces appuis sont formés d'un pied 16 prolongé par une tige filetée 17 traversant un taraudage ménagé au sein du bâti 2. De ce fait, chaque appui 15 est réglable en hauteur et peut être serré dans cette position par un écrou 18. Une réglette graduée peut si nécessaire être associée à chaque appui 15 de façon à faciliter leur réglage. En variante, il pourrait être également possible de monter le pied 16 sur une rotule, non illustrée, de façon à ce que ce dernier puisse au mieux s'adapter aux défauts de planéité du sol.

En référence à la figure 2, on voit que l'articulation 11 est de préférence située dans le plan vertical passant par l'appui 15, plus précisément par l'axe longitudinal de la tige filetée 17. Avantageusement, cette disposition permet de transmettre directement la charge de l'articulation 11 sur les appuis 15 disposés à la verticale, de chaque côté du bâti amont 2a.

Avantageusement, le dispositif 10 de la présente invention permet de monter chaque bâti 2, à l'exception du premier bâti, sur deux appuis 15 dans sa partie aval 20b et sur une articulation 11 dans sa partie amont 20a. Seul le premier bâti, illustré à gauche sur la figure 2, sera de préférence monté sur quatre appuis 15 disposés dans ses angles.

Grâce à l'objet de la présente invention, seule la mise à niveau du bâti aval, par le réglage des appuis 15 de sa partie aval 20b, subsiste lors qu'il s'agit de positionner ce bâti par rapport au bâti amont 2a le précédant. Grâce à l'articulation 11, le bâti aval 2b ne dispose que d'un seul degré de liberté, à savoir un pivotement dans le plan vertical autour de l'articulation 11 située dans sa partie amont 20a. Ainsi, tout pivotement angulaire dans le plan horizontal est rendu impossible par la présence du cylindre 12 maintenu dans ses paliers 13. Une fois la mise de niveau terminée, il conviendra d'assurer le maintien de cette mise à niveau en verrouillant la position de chacun des bâtis amont 2a et aval 2b. Ce verrouillage des bâtis 2a et 2b est réalisé à l'aide d'un tirant 21. Ce tirant 21 traverse la partie amont 20a du bâti aval 2b ainsi que le cylindre 12 pour venir se visser dans la partie aval 20b du bâti amont 2a. Le serrage complet de ce tirant 21 permettra donc de relier fermement les deux bâtis 2a et 2b et d'assurer par là le maintien de la mise à niveau effectuée. L'utilisation d'un niveau à bulle devient le seul outil supplémentaire nécessaire pour effectuer les réglages des appuis 15. Aussi, il pourrait être prévu d'intégrer un tel outil aux bâtis, aux endroits correspondants.

L'alignement et la mise à niveau du bâti aval 2b s'en trouvent donc grandement facilités. En effet, pour procéder à ces opérations il n'est plus nécessaire de recourir à une ligne de référence matérialisée par exemple par un fil tendu. Il n'est également plus nécessaire de devoir faire appel à l'utilisation d'un compas ni à celle d'un comparateur. Avantageusement encore, les barres d'espacement, utilisées précédemment pour distancer deux bâtis adjacents, font également partie des accessoires dont il n'est plus nécessaire d'employer pour réaliser un positionnement parfaitement correct.

Avantageusement encore, l'agencement d'un tel dispositif 10 au sein d'un bâti 2 ne constitue pas une installation coûteuse en regard du gain de temps dont on peut bénéficier lors de la mise en place de la machine 1.

De nombreuses améliorations peuvent être apportées au dispositif de la présente invention dans le cadre des revendications.

## Revendications

1. Dispositif (10) de positionnement et d'assemblage de bâtis (2) successifs, constituant une machine (1) d'une chaîne de production, notamment utilisé pour le positionnement relatif de deux bâtis (2) adjacents, à savoir un bâti amont (2a) et un bâti aval (2b), **caractérisé en ce qu**'il comprend au moins une articulation (11) joignant le bâti amont (2a) avec ledit bâti aval (2b) et supportant la partie amont (20a) dudit bâti aval (2b).

2. Dispositif (10) selon la revendication 1, **caractérisé en ce que** ladite articulation (11) est disposée sur la bissectrice d'un angle horizontal formé par le positionnement des deux bâtis (2) adjacents.

3. Dispositif (10) selon la revendication 2, **caractérisé en ce que** ladite articulation (11) est formée d'un cylindre (12) maintenu dans des paliers (13).

4. Dispositif (10) selon la revendication 2, **caractérisé en ce que** ladite articulation (11) est une articulation sphérique.

5. Dispositif (10) selon la revendication 2, **caractérisé en ce que** ladite articulation (11) est agencée dans un plan vertical comprenant des appuis (15) au sol, réglables en hauteur et solidaires de la partie aval (20b) du bâti amont (2a).

6. Dispositif (10) selon la revendication 1, **caractérisé en ce que** ledit positionnement des bâtis (2, 2a, 2b) est un positionnement rectiligne horizontal.

7. Dispositif (10) selon la revendication 3, **caractérisé en ce que** lesdits paliers (13) sont situés aux extrémités dudit cylindre (12).

8. Dispositif (10) selon la revendication 1, **caractérisé en ce qu**'il comprend un tirant (21) traversant la partie amont (20a) du bâti aval (2b) ainsi que le cylindre (12) de l'articulation (11) pour venir se visser dans la partie aval (20b) du bâti amont (2a) de façon à relier fermement lesdits bâtis (2a et 2b).

## Claims

1. Device (10) for positioning and assembling successive frames (2), constituting a machine (1) of a production line, particularly intended for the relative positioning of two adjacent frames (2), namely an upstream frame (2a) and a downstream frame (2b), **characterized in that** it comprises at least one joint (11) connecting the upstream frame (2a) to the said downstream frame (2b) and supporting the upstream part (20a) of said downstream frame (2b).

2. Device (10) according to claim 1, **characterized in that** said joint (11) is disposed on the bisectrix of a horizontal angle issued from the positioning of two adjacent frames (2).

3. Device (10) according to claim 2, **characterized in that** said joint (11) is formed with a cylinder (12) maintained into bearings (13).

4. Device (10) according to claim 2, **characterized in that** said joint (11) is a ball-and-socket joint.

5. Device (10) according claim 2, **characterized in that** said joint (11) is arranged into a vertical plane comprising base rests (15), adjustable in height and associated to the downstream part (20b) of the upstream frame (2a).

6. Device (10) according to claim 1, **characterized in that** said positioning of the frames (2, 2a, 2b) is a horizontal rectilinear positioning.

7. Device (10) according to claim 3, **characterized in that** said bearings (13) are located at both ends of said cylinder (12).

8. Device (10) according to claim 1, **characterized in that** it comprises a tension rod (21) crossing the upstream part (20a) of the downstream frame (2b) as well as the cylinder (12) of the joint (11) and comes to screw into the downstream part (20b) of the upstream frame (2a) so as to firmly connect the said frames (2a et 2b).

## Patentansprüche

1. Vorrichtung (10) für die Positionierung und den Zusammenbau von aufeinanderfolgenden Gestellen (2), die eine Maschine (1) einer Produktionskette bilden, wobei sie insbesondere für die relative Positionierung von zwei benachbarten Gestellen (2) verwendet wird, das heißt einem stromaufwärtigen Gestell (2a) und einem stromabwärtigen Gestell (2b), **dadurch gekennzeichnet, dass** sie wenigstens ein Gelenk (11) umfasst, welches das stromaufwärtige Gestell (2a) mit dem stromabwärtigen Gestell (2b) verbindet und den stromaufwärtigen Abschnitt (20a) des stromabwärtigen Gestells (2b) abstützt.

2. Vorrichtung (10) nach Anspruch 1, **dadurch gekennzeichnet, dass** das Gelenk (11) auf der Winkelhalbierenden eines Horizontalwinkels liegt, der durch die Positionierung der beiden benachbarten Gestelle (2) gebildet wird.

3. Vorrichtung (10) nach Anspruch 2, **dadurch gekennzeichnet, dass** das Gelenk (11) als Zylinder (12) ausgebildet ist, der in Lagern (13) gehalten ist.

4. Vorrichtung (10) nach Anspruch 2, **dadurch gekennzeichnet, dass** das Gelenk (11) ein Kugelgelenk ist.

5. Vorrichtung (10) nach Anspruch 2, **dadurch gekennzeichnet, dass** das Gelenk (11) in einer vertikalen Ebene angeordnet ist, die höhenverstellbare und fest mit dem stromabwärtigen Abschnitt (20b) des stromaufwärtigen Gestells (2a) verbundene Auflager (15) am Boden umfasst.

6. Vorrichtung (10) nach Anspruch 1, **dadurch gekennzeichnet, dass** die Positionierung der Gestelle (2, 2a, 2b) eine geradlinige horizontale Positionierung ist.

7. Vorrichtung (10) nach Anspruch 3, **dadurch gekennzeichnet, dass** die Lager (13) an den Enden des Zylinders (12) angeordnet sind.

8. Vorrichtung (10) nach Anspruch 1, **dadurch gekennzeichnet, dass** sie einen Ankerbolzen (21) umfasst, der den stromaufwärtigen Abschnitt (20a) des stromabwärtigen Gestells (2b) und den Zylinder (12) des Gelenks (11) durchquert, so dass er in den stromabwärtigen Abschnitt (20b) des stromaufwärtigen Gestells (2a) derart verschraubt wird, dass die Gestelle (2a und 2b) fest verbunden sind.
